# EUROPEAN PATENT SPECIFICATION

(11) **EP 0 232 030 B1**
(45) Date of publication and mention of the grant of the patent: **29.09.1993**
(21) Application number: 87300379.2
(22) Date of filing: 16.01.1987
(51) Int. Cl.: E04F 13/08, F16B 15/06

(54) **Fixing device**
Befestigungsvorrichtung
Dispositif de fixation

(30) Priority: 20.01.1986 GB 8601302; 21.10.1986 GB 8625206
(43) Date of publication of application: 12.08.1987
(73) Proprietor: Bickford, Charles, Benfleet Essex (GB)
(72) Inventor: Bickford, Charles, Benfleet Essex (GB)
(74) Representative: Lawrence, Malcolm Graham

(56) References cited:
- DE-A- 3 329 201
- DE-U- 8 529 898
- FR-A- 1 335 119
- FR-A- 1 367 196
- FR-A- 2 532 695
- GB-A- 2 142 108
- US-A- 1 428 247
- US-A- 2 605 670

## Description

This invention relates to a fixing method, and is particularly concerned with attaching cladding or other surface finishes to constructional materials, particularly concrete (and more particularly no fines concrete aggregates) and also brickwork and blockwork.

It is common for buildings, such as blocks of flats, to be, for example, of no-fines concrete construction externally rendered. Such buildings can be subject to problems of damp and internal build up of condensation, problems which are not overcome by such measures as double glazing. A more effective remedy is external insulation, whereby blocks of insulating material, such as glass-based caked slabs faced with wire mesh, are secured over the old plaster and a new outer rendering applied over the mesh.

The securing of the insulation slabs to no-fines concrete structures has proved extremely troublesome. Various proposals have been made, such as the use of hollow rods of steel plate into which a central nail is driven or the provision of plastics sleeves with steel screw inserts. Such two part fixing devices are expensive, slow to apply and have not been found to give particularly effective results.

US-A-1 428 247 (Morris) discloses a fixing device in the form of a nail having a spirally grooved shank. Morris does not suggest use as a masonry fixing and uses a cement coating over the shank and filling the groove.

GB-A-2 142 108 (Stadler) discloses a fixing device for use in securing roof sheeting. The device has a shank which is part screw-threaded with self-tapping threads adapted to cut a thread in metallic sheeting.

According to the invention there is provided a method of fixture for fixing a first member to a second member in the form of a concrete, brickwork or blockwork masonry structure, which method comprises boring a right circular cylindrical bore in said structure, penetrating the second member with a fixing device by a shank thereof by registering the shank and said bore and applying an axial force to said shank to drive said shank non-threadedly into said bore against close frictional contact between the shank and the internal bore surfaces to provide an interference fit, said fixing device comprising a headed portion whose head is brought into engagement with said first member in a step of the method to sandwich said first and second members together by cooperation of said shank and said headed portion of said fixing device, and said shank being of right circular cylindrical form, characterized in the shank being knurled on the circumferential surface thereof to provide a network of interconnected shallow grooves or being rifled nonthreadedly by the presence of a helical groove which is formed in the circumferential surface of said shank and is co-extensive with at least part of the shank length, and in said shallow grooves or said helical groove being vacant of material therein on entry of the shank into said bore.

The depth of rifling and the pitch will, of course, depend on the diameter and length of the shank. For example, or a shank of about 5/16" (about 8mm) diameter, a suitable groove depth is from about 2 to 5 mm, preferably about 2 mm, with a pitch of from about 1/4" (6.35 mm) to 3/8" (about 9.5 mm), preferably about 1/4" (6.35 mm).

When the fixing device is in the form of a nail, preferably the head portion comprises an integral head at one end of the shank and a retainer of larger diameter than the head rotatably mounted on the end of the shank adjacent the head. The retainer may conveniently be mounted on a neck portion of reduced diameter compared with that of the shank, the neck being of sufficient length so as to allow lateral movement of the retainer on the neck to adjust to uneven external surface conditions. In an alternative embodiment, the fixing device may be in the form of a bolt, a threaded end portion of the bolt being adapted to carry a securing nut, thus forming by that combination of components the headed portion referred to above and the nut, of course, engaging in use with the first member. A retainer of larger diameter than the nut may be adjustably mounted on the threaded head portion.

In a further alternative form of the invention, the fixing device comprises a hollow shank and apertured head flange portion so that a pin, then forming part of said fixing device, can be driven through the head portion and into the shank although, as will be seen from the description hereafter, such a fixing device can be used without use of such a pin. The hollow shank may have inturned projections intermediate its length and/or adjacent the end opposite the head portion intended to increase the securing strength of the fixing device when a pin is driven into the shank against the projections.

The method of the invention is especially valuable for use in attaching cladding, or other surface finishing, to no-fines concrete aggregates.

Embodiments of the invention will now be described by way of example only with reference to the accompanying drawings in which:-
Figure 1 is a perspective view of a first embodiment in accordance with the invention in the form of a fixing nail;
Figure 2 is a side view of the nail of Figure 1;
Figure 3 is an end view of the nail of Figure 1;
Figure 4 is a sketch illustrating use of the nail;
Figure 5 is a side view of a second embodiment of the invention in the form of a fixing bolt;
Figure 6 is a perspective view of a third fixing device in accordance with the invention;
Figure 7 is a side view of the device of Figure 6;
Figure 8 is a section on the line VIII-VIII of Figure 7; and
Figure 9 is an end view of the device of Figure 6.

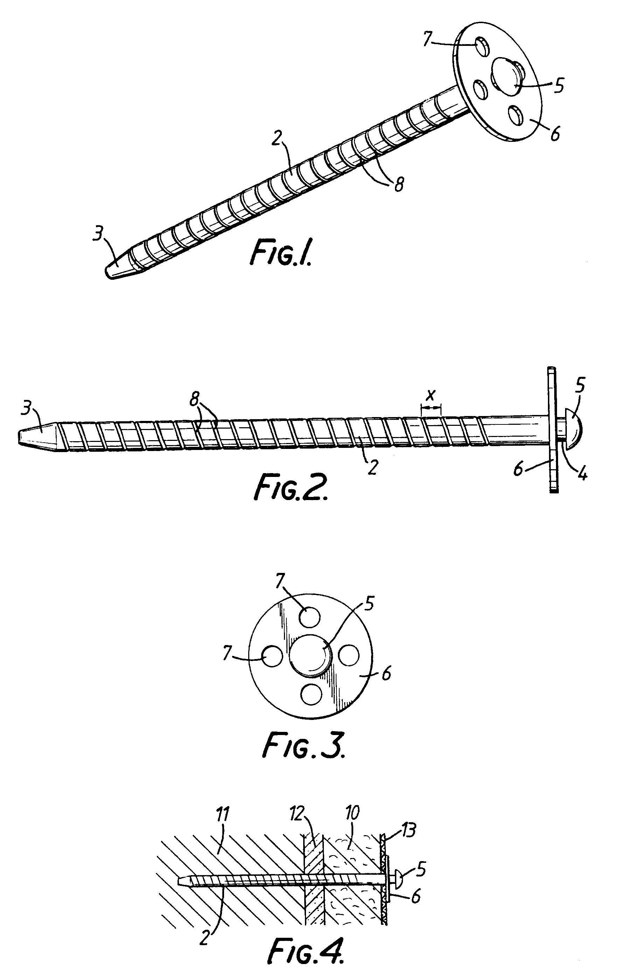

Figures 1 to 3 show a fixing device in the form of a nail which comprises an elongated shank 2, with a pointed end 3 and an opposite end formed with a neck 4 of reduced section surmounted by an integral domed head 5. Neck 4 receives a retainer disc 6 provided with holes 7 for introduction of subsidiary fixing means to hold the nail in use against the outer surface of a wall. Disc 6 is of a width less than the axial length of neck 4 so that the disc can rotate on neck 4 and slide axially to accommodate to uneven outer wall surfaces.

The nail is preferably of stainless steel to minimize corrosion but may of course be of other materials of suitable strength. Disc 6 may be of the same or a different material from that of shank 2.

Shank 2 has its outer surface rifled with a helical groove 8. While the depth and pitch of the rifling will depend on the dimensions of the nail and the material in which it is to be used, a suitable depth for the groove is about 2 to 5 mm (preferably about 2 mm) with a spacing x of about 1/4" (6.35 mm) to 3/8" (about 9.5 mm), preferably about 1/4" (6.35 mm). A suitable diameter for the nail is 5/16" (about 8 mm). The length can vary considerably but may be, for example, 6" (about 150 mm). It will be noted that the shank 2 is rifled rather than provided with a thread. Thus the nail cannot carry a nut or be screwed into place. It will be appreciated that the rifling does not need to extend along the entire shank.

The nail may be used, as illustrated in Figure 4, to hold a block 10 of insulating material, such as a glass based commercially available cladding, to buildings of no-fines concrete construction and traditional structures faced with plaster renderings. The blocks 10 may be externally faced with a wire mesh 13. In use, a hole is drilled through the plaster layer 12 and into wall 11, which hole is of the same diameter as, or slightly less than, that of the nail and the nail then hammered into place through the insulating. The disc 6 will accommodate on the neck 5 dependent on the evenness of the surface of plaster 12 and block 10. Additional fixings can be inserted through holes 7 of disc 6 into block 10. An additional new outer rendering (not shown) can then be applied to the mesh 13 over the nail head 5 and disc 6.

We have found that the rifled nail provides a very strong fixing and resists withdrawal from the wall and plaster. Indeed we have found that constant withdrawal strengths of at least 350 kg (3.43 kN) are obtainable using a nail such as that shown in the drawings into a wall of no-fines concrete. This is in contrast to a fluctuating value of 50 kg (0.49 kN) to 120 kg (1.18 kN) for a conventional two-part fixing such as those known under the trade mark "Rawlplug".

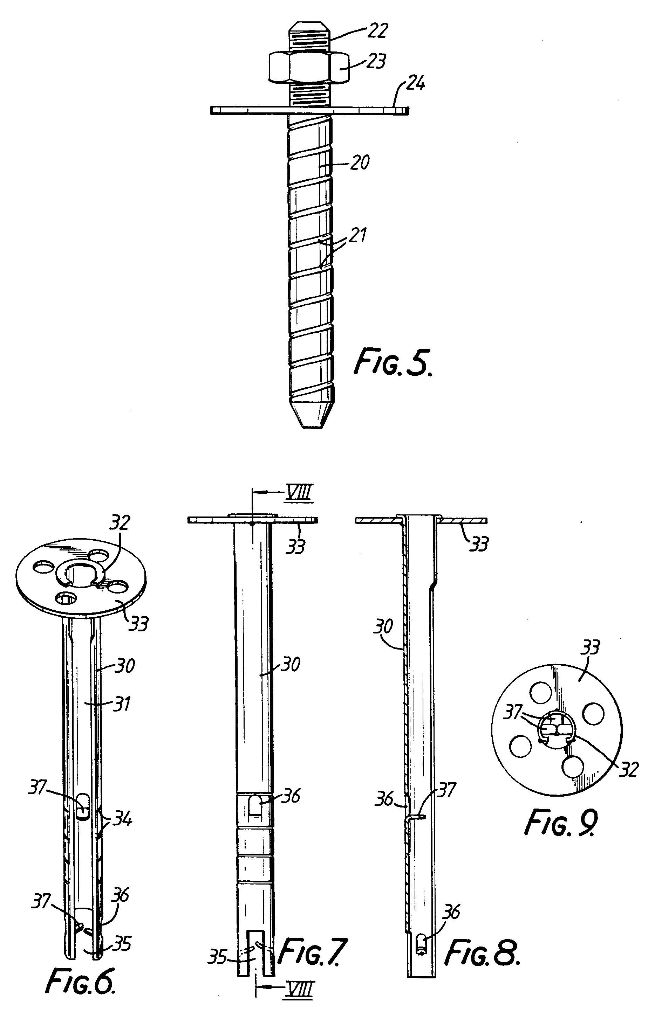

The nail head of Figure 1 can be replaced by a threaded bolt head as shown in Figure 5. Thus Figure 5 shows a bolt having a shank 20 which has been rifled as shown at 21. The bolt has a threaded portion 22 carrying a nut 23. A loose washer 24 is mounted between the shank 20 and nut 23 on the threaded portion 22. The bolt may be conveniently made of stainless steel, but other materials are possible dependent on the intended use. The depth of rifling and overall dimensions can also vary dependent on the intended use. As an example, the bolt may have a shank length of about 95 mm and 10 mm diameter with a threaded head of 20 mm length and 10 mm diameter carrying a 15 mm x 7 mm adjustable nut and a 40 mm x 1 mm loose washer. A suitable rifling depth is 1 mm. Such a bolt may be used for anchoring materials such as steel, iron or timber to concrete, brickwork or blockwork. We have found that pull out strengths of the order of 5.50 kN can be obtained in dense concrete and of the order of 2.5 kN in brickwork and blockwork.

Figures 6 to 9 show a third embodiment of the invention in the form of a hollow sleeve 30 suitably of steel, having a longitudinal slit 31 extending the entire length thereof. The sleeve terminates at one end in an outturned flange 32 which holds in place a fixed washer 33 having apertures therein similar to those of washer 6 of Figures 1 to 4. The outer surface of at least the other end portion of sleeve 30 has rifling 34 similar to that described above. The end portion of sleeve 30 not carrying washer 33 is formed with a longitudinally extending slit 35. Cutouts 36 are also provided at that end portion and spaced therefrom forming inturned lugs 37. The two sets of lugs are offset by 90° as best seen in Figure 9.

The device of Figures 6 to 9 can be used in its own right as a fixing device in certain circumstances, especially where a lightweight fixing device is required which can be manufactured comparatively cheaply, for example, from rolled steel plate. However the fixing device is particularly suitable for use with an inner nail (not shown) which is rammed home within sleeve 30 against lugs 37 so as to cause outward expansion of the sleeve, especially in the region of the slit 35, to increase the strength of the fixing. The inner nail itself may carry rifling if desired. Such a fixing with an inner nail has been found useful for making attachments to weak substrata and we have found that pull out strengths in excess of 3.25 kN can be obtained.

The fixing devices shown in the drawings can be knurled instead of rifled. The outer surfaces of the fixing devices described herein can be additionally formed with splines and/or moles to increase the fixing strength dependent on the constructional material in which the device is being used.

## Claims

1. A method of fixture for fixing a first member (10) to a second member (11) in the form of a concrete, brickwork or blockwork masonry structure (11), which method comprises boring a right circular cylindrical bore in said structure (11), penetrating the second member (11) with a fixing device by a shank (2) thereof by registering the shank (2) and said bore and applying an axial force to said shank (2) to drive said shank (2) non-threadedly into said bore against close frictional contact between the shank (2) and the internal bore surfaces to provide an interference fit, said fixing device comprising a headed portion (5) whose head is brought into engagement with said first member (10) in a step of the method to sandwich said first and second members (10,11) together by cooperation of said shank (2) and said headed portion (5) of said fixing device, and said shank (2) being of right circular cylindrical form, characterized in the shank (2) being knurled on the circumferential surface thereof to provide a network of interconnected shallow grooves or being rifled non-threadedly by the presence of a helical groove (8) which is formed in the circumferential surface of said shank (2) and is co-extensive with at least part of the shank (2) length, and in said shallow grooves or said helical groove (8) being vacant of material therein on entry of the shank (2) into said bore.

2. A method as claimed in Claim 1 wherein the fixing device is one in which the outer surface of the shank (2) is rifled with a single spiral groove (8).

3. A method as claimed in Claim 1 or Claim 2 wherein the fixing device is in the form of a nail having an integral head (5) at one end of the shank (2) and a retainer (6) of larger diameter than the head (5) rotatably mounted on the end of the shank (2) adjacent the head (5).

4. A method as claimed in Claim 3 wherein the fixing device has said retainer (6) mounted on a neck portion (4), of reduced diameter compared with that of the shank (2), the neck portion (4) being of sufficient length so as to allow lateral movement of the retainer (6) on the neck portion (4).

5. A method as claimed in any preceding claim wherein the fixing device comprises a bolt, the bolt having a threaded end portion (22) adapted to carry a securing nut (23) so as together with said nut (23) to constitute said headed portion (5).

6. A method as claimed in Claim 5 wherein the fixing device comprises a retainer (24) of larger diameter than the nut (23) and adjustably mounted on the threaded end portion (22).

7. A method as claimed in Claim 1 or Claim 2 wherein the fixing device comprises a hollow shank (30) and an apertured flange portion (32,33) adapted to receive a pin driven in use in the method through the head portion and into the shank (30).

8. A method as claimed in Claim 1 or Claim 2 wherein the shank (2) of said fixing device comprises hollow shank (30) and is driven non-threadedly into the bore to provide said interference fit, said headed portion of said hollow shank (30) being in the form of an apertured head flange portion (32, 33).

9. A method as claimed in Claim 7 or Claim 8 wherein the hollow shank (30) has in-turned projections (37) intermediate its length and/or adjacent that end of the shank (30) opposed to the head portion.

10. A method as claimed in any one of Claims 7 to 9 wherein the hollow shank (30) has a longitudinal slit (31) extending the entire length thereof.

11. A method as claimed in any preceding claim wherein cladding (10) or other surface finishing forms said first member and said second member is a structure (11) made of no-fines concrete aggregate.

## Patentansprüche

1. Befestigungsverfahren zur Befestigung eines ersten Teils (10) an einem zweiten Teil (11) aus Beton-, Ziegel- oder Mauerwerk (11), wobei das Verfahren die Schritte enthält: Bohren einer geraden kreisförmigen, zylindrischen Bohrung in die Struktur (11), Durchdringen des zweiten Teils (11) mit einem Befestigungsmittel durch dessen Schaft (2), indem der Schaft (2) und die Durchbohrung paßgenau ausgerichtet werden und eine axiale Kraft auf den Schaft (2) ausgeübt wird, um den Schaft (2) ohne Drehung in die Bohrung in einen engen Reibungskontakt zwischen Schaft und der inneren Bohrungsoberfläche zu treiben, um einen Preßsitz vorzusehen, wobei das Befestigungsmittel einen Kopfbereich (5) enthält, dessen Kopf mit dem ersten Teil (10) in einem Verfahrensschritt in Verbindung gebracht wird, um die ersten und zweiten Teile (10, 11) durch Zusammenwirken des Schafts (2) und des Kopfbereichs (5) des Befestigungsmittels aufeinander zu bringen, wobei der Schaft (2) mit genau rundzylindrischer Form auf seiner umgebenden Oberfläche gerändelt ist, um ein Netzwerk von miteinander verbundenen flachen Vertiefungen vorzusehen oder daß er ohne Gewinde durch das Vorhandensein einer spiralförmigen Vertiefung (8) gezogen ist, die auf der Umfangsoberfläche des Schafts (2) ausgebildet ist und die sich zumindest entlang eines Teils der Länge des Schafts (2) erstreckt, und wobei die flachen Vertiefungen oder die sprialförmige Vertiefung (8) kein Material enthalten, wenn der Schaft (2) in die Durchbohrung eintritt.

2. Verfahren nach Anspruch 1, wobei das Befestigungsmittel mit einer einzelnen, spiraligen Vertiefung der äußere Oberfläche des Schafts (2) versehen ist.

3. Verfahren nach Anspruch 1 oder 2, wobei das Befestigungsmittel die Form eines Nagels aufweist, der einen integrierten Kopf (5) an einer Seite des Schafts (2) und ein Halteteil (6) aufweist, das einen größeren Durchmesser als der Kopf (5) aufweist und das drehbar an dem dem Kopf (5) benachbarten Ende des Schafts (2) befestigt ist.

4. Verfahren nach Anspruch 3, wobei das Halteteil (6) auf dem Halsbereich (4) des Befestigungsmittels gelagert ist, wobei der Halsbereich (4) einen im Vergleich zu dem des Schafts (2) verringerten Durchmesser aufweist und eine ausreichende Länge besitzt, um seitliche Bewegung des Halteteils (6) auf dem Halsbereich (4) zu ermöglichen.

5. Verfahren nach einem oder mehreren der vorhergehenden Ansprüche, wobei das Befestigungsmittel einen Bolzen enthält, der einen Gewindeendbereich (22) aufweist, der so ausgebildet ist, daß er eine Sicherungsmutter (23) tragen kann und so zusammen mit der Sicherungsmutter (23) den Kopfbereich (5) bildet.

6. Verfahren nach Anspruch 5, wobei das Befestigungsmittel ein Halteteil (24) enthält, der einen größeren Durchmesser als die Mutter (23) aufweist und der einstellbar am Gewindeendbereich (22) befestigt ist.

7. Verfahren nach Anspruch 1 oder 2, wobei das Befestigungsmittel einen hohen Schaft (30) und einen mit Öffnungen versehenen Flanschbereich (32, 33) enthält, der so ausgebildet ist, daß er einen Stift aufnimmt, der bei Anwendung des Verfahrens durch den Kopfbereich und in den Schaft (30) getrieben wird.

8. Verfahren nach Anspruch 1 oder 2, wobei der Schaft (2) des Befestigungsmittels einen hohen Schaft (30) enthält und nicht drehend in die Bohrung getrieben wird, um einen Preßsitz vorzusehen, wobei der Kopfbereich des hohen Schafts (30) die Form eines mit Öffnungen versehenen Kopfflanschbereichs (32, 33) aufweist.

9. Verfahren nach Anspruch 7 oder 8, wobei der hohle Schaft (30) nach innen gerichtete Vorsprünge (37) entlang seiner Länge und/oder benachbart dem Ende des Schafts (30), das dem Kopfbereich gegenüberliegt, aufweist.

10. Verfahren nach einem der Ansprüche 7 bis 9, wobei der hohle Schaft (30) einen Längsschlitz (31) aufweist, der sich entlang seiner ganzen Länge erstreckt.

11. Verfahren nach einem oder mehreren der vorhergehenden Ansprüche, wobei eine Plattierung (10) oder ein anderer Oberflächenabschlüß das erste Teil bilden und das zweite Teil durch eine Struktur (11) aus einer grobkörnigen Betonverbindung gebildet ist.

## Revendications

1. Procédé de fixation pour fixer un prier élément (10) à un second élément (11) sous la forme d'une structure de maçonnerie en béton, en briques ou en pierres (11) lequel procédé comprend le perçage d'un trou cylindrique circulaire droit dans ladite structure (11), la pénétration du second élément (11) par la tige (2) d'un dispositif de fixation en mettant en correspondance la tige (2) et ledit trou et en appliquant une force axiale à la tige (2) pour enfoncer, d'une manière non vissée, ladite tige (2) dans ledit trou contre la force de contact étroit à friction entre la surface de la tige (2) et la surface interne du trou pour réaliser une liaison serrée, ledit dispositif de fixation comprenant une partie formant tête (5) dont la tête est amenée en contact, dans une étape du procédé, avec ledit premier élément (10) pour prendre en sandwich lesdits premier et second éléments (10, 11) ensemble, par la coopération de ladite tige (2) et de ladite partie formant tête (5) dudit dispositif de fixation, et ladite tige (2) étant d'une forme cylindrique circulaire droite, caractérisé en ce que la tige (2) est moletée sur sa surface circonférentielle pour réaliser un réseau de rainures peu profondes interconnectées, ou bien est rayée, de façon non filetée, par la présence d'une rainure hélicoïdale (8) qui est formée dans la surface circonférentielle de ladite tige (2) et qui s'étend sur au moins une partie de la longueur de la tige (2), et en ce que lesdites rainures peu profondes ou ladite rainure hélicoïdale (8) ne contiennent aucune matière lors de la pénétration de la tige (2) dans ledit trou.

2. Procédé tel que revendiqué dans la revendication 1, dans lequel le dispositif de fixation est un dispositif dans lequel la surface extérieure de la tige (2) est rayée avec une rainure en spirale (8) unique.

3. Procédé tel que revendiqué dans la revendication 1 ou la revendication 2, dans lequel le dispositif de fixation a la forme d'un clou, comportant une tête (5), qui en fait partie intégrante, à une extrémité de la tige (2) et un élément de retenue (6), d'un diamètre plus grand que la tête (5), monté mobile en rotation sur l'extrémité de la tige (2) adjacente à la tête (5).

4. Procédé tel que revendiqué dans la revendication 3, dans lequel ledit élément de retenue (6) est monté sur une partie col (4) du dispositif de fixation, d'un diamètre réduit par comparaison avec celui de la tige (2), la partie col (4) étant d'une longueur suffisante pour permettre un déplacement latéral de l'élément de retenue (6) sur la partie col (4).

5. Procédé tel que revendiqué dans l'une quelconque des revendications précédentes, dans lequel le dispositif de fixation comprend un boulon, le boulon ayant une partie d'extrémité filetée (22), conçue pour porter un écrou de fixation (23), de manière à constituer, en même temps que ledit écrou (23), ladite partie formant tête (5).

6. Procédé tel que revendiqué dans la revendication 5, dans lequel le dispositif de fixation comprend un élément de retenue (24), d'un diamètre plus grand que l'écrou (23), et monté d'une manière réglable sur la partie d'extrémité filetée (22).

7. Procédé tel que revendiqué dans la revendication 1 ou la revendication 2, dans lequel le dispositif de fixation comprend une tige creuse (30) et une partie collerette à trous (32, 33), conçue pour recevoir, lors de la mise en oeuvre du procédé, une broche enfoncée, dans la tige (30), à travers la partie tête.

8. Procédé tel que revendiqué dans la revendication 1 ou la revendication 2, dans lequel la tige (2) dudit dispositif de fixation comprend une tige creuse (30) et est enfoncée, d'une manière non vissée, dans le trou pour réaliser ladite liaison serrée, ladite partie formant tête de ladite tige creuse (30) ayant la forme d'une partie collerette tête à trous (32, 33).

9. Procédé tel que revendiqué dans la revendication 7 ou la revendication 8, dans lequel la tige creuse (30) comporte des saillies tournées vers l'intérieur (37), situées dans une partie intermédiaire de sa longeur, et/ou adjacentes à l'extrémité de la tige (30) qui est opposée à la partie tête.

10. Procédé tel que revendiqué dans l'une quelconque des revendications 7 à 9, dans lequel la tige creuse (30) possède une fente longitudinale (31) s'étendant sur toute sa longueur.

11. Procédé tel que revendiqué dans l'une quelconque des revendications précédentes, dans lequel un placage (10), ou une autre surface de finition, constitue ledit premier élément, et dans lequel ledit second élément est une structure (11) faite d'agrégat de béton sans élément fin .
